# EUROPÄISCHE PATENTANMELDUNG

(11) **EP 0 895 319 A1**
(43) Veröffentlichungstag der Anmeldung: **03.02.1999**
(21) Anmeldenummer: 97113231.1
(22) Anmeldetag: 31.07.1997
(51) Int. Cl.: H01R 23/10, H01R 31/06, H01R 13/24, H01R 13/639, H04B 1/38

(54) **Ladeverbindung für ein schnurloses Kommunikationsendgerät**

(71) Anmelder: SIEMENS AKTIENGESELLSCHAFT, 80333 München (DE)
(72) Erfinder: Stögmüller, Rupert, 81739 München (DE)

(57) **Zusammenfassung**

Die Erfindung betrifft eine Ladeverbindung für ein schnurloses Kommunikationsendgerät, dessen Oberseite und Unterseite im vorderen Bereich spitzwinklig aufeinander zulaufen.

Zur Vermeidung eines Eingriffs in das Gehäusedesign sind in der Nähe der Vorderkante des Kommunikationsendgeräts (1) auf der Unterseite (2) flächige Kontakte (4) angebracht. Weiterhin ist ein aus Unter- und Oberschale (6, 7) bestehendes Anschlußstück (5) vorgesehen, das im vorderen Bereich der Unterschale (6) entsprechende Gegenkontakte (8) aufweist. Die Vorderkante der Unterschale (6) ist als Steg (9) ausgebildet, welcher im Verbindungszustand in eine entsprechend ausgebildete Nut auf der Unterseite (2) des Kommunikationsendgeräts (1) eingreift, und die Oberschale (7) ist verschiebbar auf der Unterschale (6) derart gelagert, daß im Verbindungszustand die Oberschale (7) in einer nach vorn geschobenen Position einrastbar ist und die vorderen Bereiche der Unter- und Oberschale (6, 7) die Unter- und Oberseite (2, 3) des Kommunikationsendgeräts (1) umschließen.

## Beschreibung

Die vorliegende Erfindung betrifft eine Ladeverbindung für ein schnurloses Kommunikationsendgerät, dessen Oberseite und Unterseite im vorderen Bereich spiztwinklig aufeinander zulaufen.

Bei einem derartigen als Design-Gerät ausgebildeten Kommunikationsendgerät besteht die Aufgabe, eine Ladeverbindung zum Aufladen der in dem Gerät befindlichen Akkus zu entwerfen, welche möglichst keinen Eingriff in das Design des Endgeräts erfordert und daher die ästhetische Wirkung des Endgerätekorpers nicht beeinträchtigt.

Diese Aufgabe wird bei einer Ladeverbindung der eingangs genannten Art dadurch gelöst, daß in der Nähe der Vorderkante des Kommunikationsendgerätes auf der Unterseite parallel zur Vorderkante flächige Kontakte angebracht sind, die sich in der Ebene der Unterseite erstrecken, daß ein aus Unter- und Oberschale bestehendes Anschlußstück vorgesehen ist, daß im vorderen Bereich der Unterschale innen parallel zur Vorderkante der Unterschale entsprechende Gegenkontakte vorgesehen sind, daß die Vorderkante der Unterschale als Steg ausgebildet ist, welcher im Verbindungszustand in eine entsprechend ausgebildete Nut auf der Unterseite des Kommunikationsendgerätes eingreift, daß die Oberschale verschiebbar auf der Unterschale gelagert ist, wobei im Verbindungszustand die Oberschale in einer nach vorn geschobenen Position einrastbar ist und die vorderen Bereiche der Unter- und Oberschale die Unter- und Oberseite des Kommunikationsendgerätes im vorderen Bereich umschließen.

Die erfindungsgemäße Ladeverbindung erfordert keinen auffälligen Eingriff in das Design des Kommunikationsendgerätegehäuses. Die endgeräteseitigen Kontakte fügen sich unauffällig in die Oberfläche der Unterschale ein.

Die Arretierung des Anschlußstücks an dem Kommunikationsendgerät erfolgt durch einfaches Umgreifen der spitzwinkligen Vorderkante des Kommunikationsendgerätes, wobei sowohl eine stabile mechanische als auch stabile elektrische Verbindung hergestellt wird.

Zweckmäßige Ausgestaltungen und Weiterbildungen der erfindungsgemäßen Ladeverbindung ergeben sich aus den Unteransprüchen sowie aus der nachfolgenden Beschreibung von Ausführungsbeispielen der Erfindung.

Die Erfindung wird anschließend anhand mehrerer in der Zeichnung dargestellter Ausführungsbeispiele näher beschrieben.

Es zeigen
Figur 1 eine perspektivische Ansicht von oben eines Kommunikationsendgeräts mit einem fest angeschlossenen Anschlußstück einer ersten Ausführungsform der erfindungsgemäßen Ladeverbindung,
Figur 2 die in Figur 1 dargestellte Ladeverbindung in perspektivischer Ansicht von unten,
Figur 3 die in Figur 2 gezeigte perspektivische Ansicht als Explosionsdarstellung mit separaten Kommunikationsendgerät und separaten Anschlußstück,
Figur 4 eine perspektivische Ansicht von oben eines Kommunikationsendgeräts mit einem fest angeschlossenen Anschlußstück einer zweiten Ausführungsform der erfindungsgemäßen Ladeverbindung,
Figur 5 die in Figur 4 dargestellte Ladeverbindung in perspektivischer Ansicht von unten,
Figur 6 die in Figur 2 gezeigte perspektivische Ansicht als Explosionsdarstellung mit separaten Kommunikationsendgerät und separaten Anschlußstück,

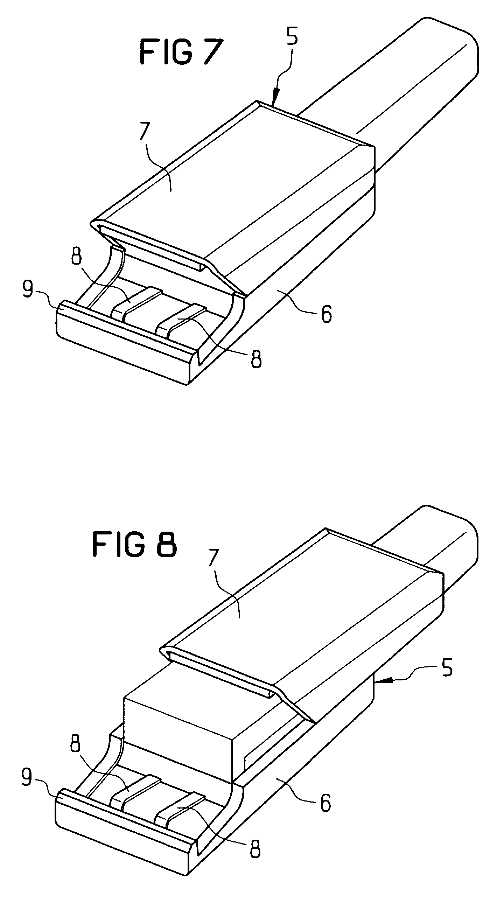

Figur 7 eine perspektivische Darstellung eines Anschlußstücks mit nach vorn geschobener Oberschale, und
Figur 8 ein erfindungsgemäßes Anschlußstück mit nach hinten geschobener Oberschale.

Bei dem Kommunikationsendgerät 1 für die erfindungsgemäße Ladeverbindung handelt es sich um ein Kommunikationsendgerät, welches aus einer Unterschale 2 und einer Oberschale 3 besteht, welche gegeneinander verschiebbar sind. Auf den eigentlichen Aufbau des Kommunikationsendgerätes 1 soll hier nicht näher eingegangen werden, da dieser nicht erfindungswesentlich ist.

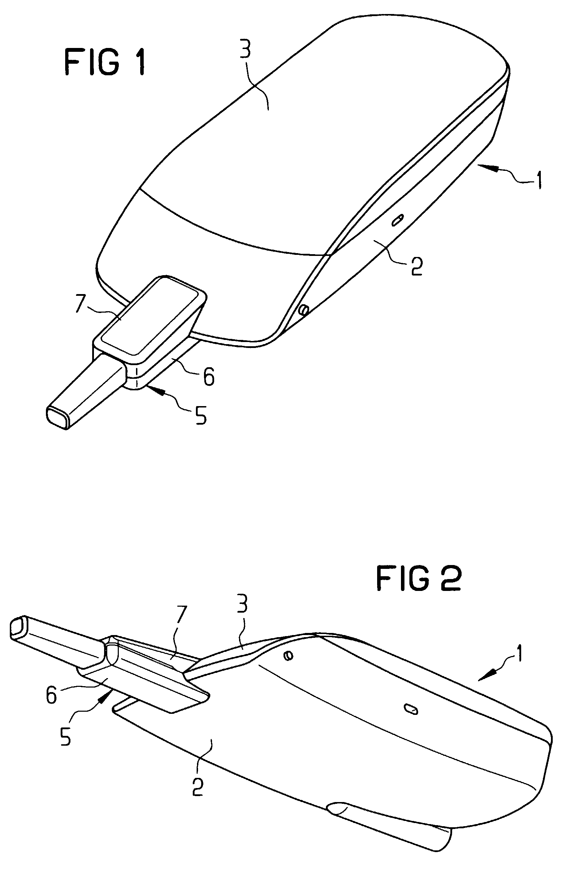

Das Anschlußstück 5 der erfindungsgemäßen Ladeverbindung kann einmal als Ladestecker, welcher fest mit einem Ladekabel (nicht gezeigt) verbunden ist, zur direkten Verbindung eines Kabels mit dem Kommunikationsendgerät ausgebildet sein. Siehe hierzu die Figuren 1 bis 3. Eine zweite Möglichkeit der Ausbildung des Anschlußstücks für die erfindungsgemäße Ladeverbindung besteht darin, daß das Anschlußstück als reiner Ladeadapter zur Aufnahme eines Steckers 12 an seinem hinteren Ende ausgebildet ist.

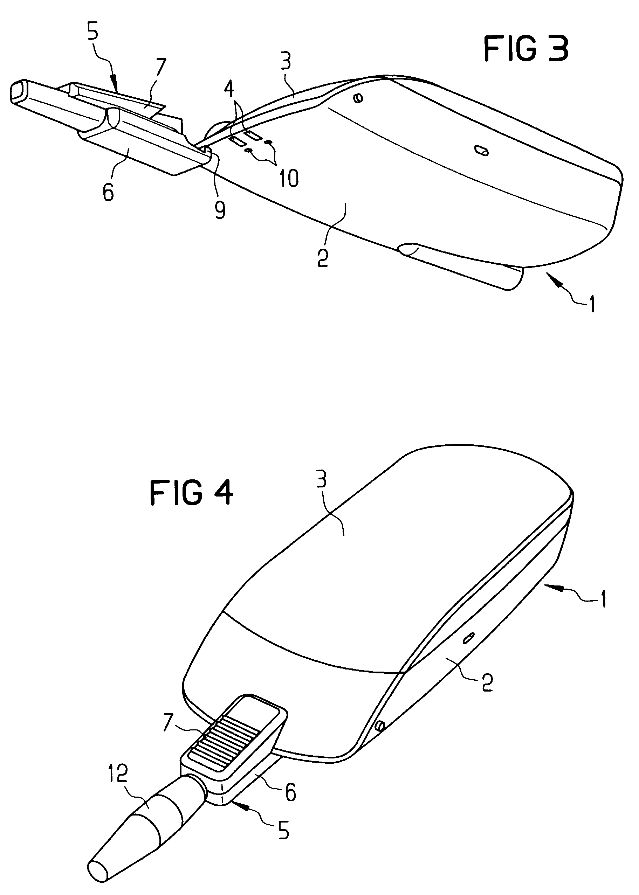

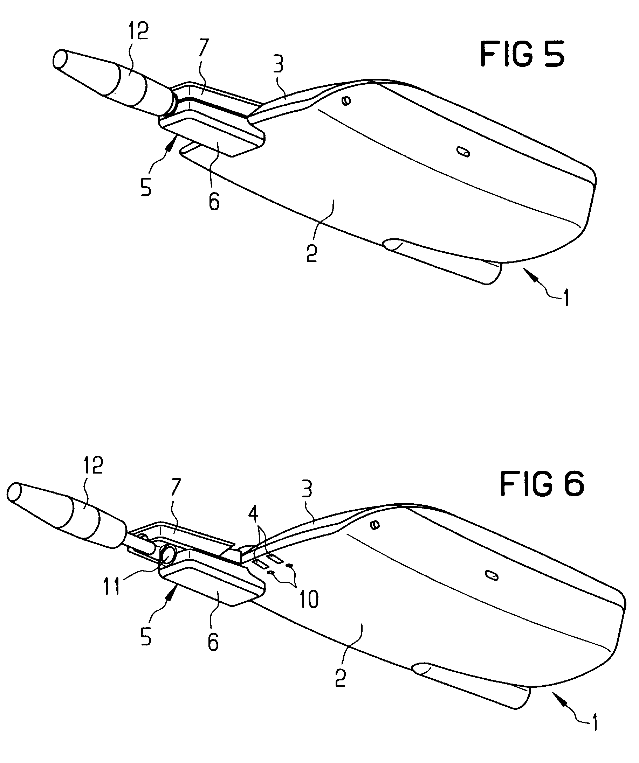

Die Figuren 3 und 6 zeigen die Anordnung der Ladekontakte auf der Unterseite des Kommunikationsendgeräts 1. Die Ladekontakte bestehen aus zwei parallel angeordneten flächigen Kontakten 4, welche parallel zur Vorderkante des Kommunikationsendgeräts 1 in der Ebene der Unterseite 2 vorgesehen sind. Hinter den flächigen Kontakten 4 sind zwei kreisförmige Aussparungen 10 mit einem geringen Durchmesser vorgesehen. Statt dieser Aussparungen 10 kann auch eine Nut vorgesehen werden, welche parallel zur Vorderkante des Kommunikationsendgeräts verläuft. Die Aufgabe dieser Aussparungen, bzw. der Nut wird später erklärt.

Das Anschlußstück 5 der erfindungsgemäßen Ladeverbindung besteht im wesentlichen aus einer Unterschale 6 und einer Oberschale 7. Im vorderen Bereich der Unterschale 6 sind parallel zur Vorderkante der Unterschale entsprechende Gegenkontakte 8 zu den flächigen Kontakten 4 des Kommunikationsendgeräts 1 ausgebildet. Diese Gegenkontakte 8 sind über eine kleine hier nicht gezeigte Leiterplatte in der Unterschale 6 des Anschlußstücks 5 entweder direkt mit einem Ladekabel oder aber mit einer Steckeraufnahme 11 verbunden. Auf der Unterschale 6 des Anschlußstücks 5 ist die Oberschale 7 verschiebbar und verrastbar gelagert. Dies kann mittels herkömmlicher mechanischer Führungen und zusätzlicher Rastelemente erfolgen, was hier aber nicht näher beschrieben werden soll, da es sich um dem Fachmann allgemein bekannte Techniken handelt. Die Führung der Oberschale 7 auf der Unterschale 6 ist so eingerichtet, daß die Oberschale 7 sowohl im nach vorne geschobenen Zustand als auch im zurückgeschobenen Zustand einrastet.

Die Unterschale 6 kann an ihrer Vorderkante einen Steg 9 aufweisen, welcher in eine auf der Unterseite 2 des Kommunikationsendgerätes 1 vorgesehenen Nut eingreifen kann. Statt eines Steges 9 können aber auch an der Vorderkante der Unterschale 6 jeweils rechts und links dornartige Erhebungen vorgesehen werden, die in kreisförmige Aussparungen 10 auf der Unterseite 2 des Kommunikationsendgeräts eingreifen.

Das heißt, die Ladeverbindung wird hergestellt, indem zuerst das Anschlußstück 5 von unten auf die Unterseite 2 des Kommunikationsendgeräts 1 aufgesetzt wird, so daß der Steg 9 in die vorhandene Nut eingreift oder die dornartigen Erhebungen in die Aussparungen 10 eingreifen. Danach wird dann die Oberschale 7 nach vorne in ihre Rastposition geschoben. Dadurch umgreifen die Oberschale 7 und die Unterschale 6 des Anschlußstücks die Vorderkante des Kommunikationsendgerätes und stellen eine mechanisch und elektrisch stabile Ladeverbindung her.

## Patentansprüche

1. Ladeverbindung für ein Kommunikationsendgerät, dessen Oberseite und Unterseite im vorderen Bereich spitzwinklig aufeinander zulaufen,
dadurch gekennzeichnet,
daß in der Nähe der Vorderkante des Kommunikationsendgeräts (1) auf der Unterseite (2) parallel zur Vorderkante flächige Kontakte (4) angebracht sind, die sich in der Ebene der Unterseite (2) erstrecken,
daß ein aus Unter- und Oberschale (6, 7) bestehendes Anschlußstück (5) vorgesehen ist,
daß im vorderen Bereich der Unterschale (6) innen parallel zur Vorderkante der Unterschale (6) entsprechende Gegenkontakte (8) vorgesehen sind,
daß die Vorderkante der Unterschale (6) als Steg (9) ausgebildet ist, welcher im Verbindungszustand in eine entsprechend ausgebildete Nut auf der Unterseite (2) des Kommunikationsendgeräts (1) eingreift, und
daß die Oberschale (7) verschiebbar auf der Unterschale (6) gelagert ist, wobei im Verbindungszustand die Oberschale (7) in einer nach vorn geschobenen Position einrastbar ist und die vorderen Bereiche der Unter- und Oberschale (6, 7) die Unter- und Oberseite (2, 3) des Kommunikationsendgeräts (1) im vorderen Bereich umschließen.

2. Ladeverbindung nach Anspruch 1,
dadurch gekennzeichnet,
daß das hintere Ende der Unterschale (6) des Anschlußstücks (5) fest mit einem Ladekabel verbunden ist.

3. Ladeverbindung nach Anspruch 1,
dadurch gekennzeichnet,
daß das hintere Ende der Unterschale (6) des Anschlußstücks (5) mit einer Steckeraufnahme (11) versehen ist.
